# EUROPÄISCHE PATENTSCHRIFT

(11) **EP 3 478 059 B1**
(45) Veröffentlichungstag und Bekanntmachung des Hinweises auf die Patenterteilung: **02.11.2022**
(21) Anmeldenummer: 17735090.7
(22) Anmeldetag: 30.06.2017
(51) Int. Cl.: A01M 23/18, A01M 25/00, A01N 25/00

(54) **RODENTIZID UND VERWENDUNG EINES MITTELS ZUR NAGETIERBEKÄMPFUNG**
RODENTICIDE AND USE OF A SUBSTANCE FOR CONTROL OF RODENTS
RODENTICIDE ET UTILISATION D'UN AGENT POUR LA LUTTE CONTRE DES RONGEURS

(30) Priorität: 30.06.2016 AT 505892016; 20.10.2016 AT 509562016
(43) Veröffentlichungstag der Anmeldung: 08.05.2019
(73) Patentinhaber: UK3M Green Rodenticide GmbH, 39012 Meran (BZ) (IT)
(72) Erfinder: GASSER, Klaus, 39010 Gargazon (IT)
(74) Vertreter: Puchberger & Partner Patentanwälte
(86) Internationale Anmeldenummer: PCT/EP2017/066245
(87) Internationale Veröffentlichungsnummer: WO 2018/002292

(56) Entgegenhaltungen:
- CN-A- 103 999 879
- FR-A1- 2 901 455
- FR-A1- 3 002 414
- GB-A- 735 694
- US-A- 5 027 548
- US-A1- 2015 351 378
- Unbekannt: "Vergiftungsfälle durch Grayanotoxine in Rhododendron-Honigen aus der türki- schen Schwarzmeerregion", , 3. September 2010 (2010-09-03), XP055410737, Gefunden im Internet: URL:http://www.bfr.bund.de/cm/343/vergiftu ngsfaelle_durch_grayanotoxine_in_rhododend ron_honigen_aus_der_tuerkischen_schwarzmee rregion.pdf [gefunden am 2017-09-27]
- Unbekannt: "Vergiftungsfälle durch Grayanotoxine in Rhododendron-Honigen aus der türki- schen Schwarzmeerregion", , 3 September 2010 (2010-09-03), XP055410737, Retrieved from the Internet: URL:http://www.bfr.bund.de/cm/343/vergiftu ngsfaelle_durch_grayanotoxine_in_rhododend ron_honigen_aus_der_tuerkischen_schwarzmee rregion.pdf [retrieved on 2017-09-27]

## Beschreibung

Die Erfindung betrifft ein Mittel zur Bekämpfung von Schädlingen, insbesondere von Nagetieren wie Mäusen. Weiters betrifft die Erfindung die Verwendung und Anwendung des Mittels zur Schädlingsbekämpfung und eine Vorrichtung zur Anwendung dieses Mittels mit einer Köderbox.

Nagetiere, wie Mäuse und Ratten, sind Kulturfolger des Menschen und suchen beispielsweise direkt in den Aufbewahrungsorten von Lebensmitteln nach Nahrung. Weiters halten sich Nagetiere auch bevorzugt in den zur Nahrungsmittelproduktion genutzten Flächen auf, wo sie die Feldfrüchte selbst verzehren oder durch ihre unterirdische Lebensweise an Wurzeln und Knollen der Pflanzen Schäden anrichten. In Indonesien gehen beispielsweise 17 % der Reisernte durch Nagetiere verloren. All dies bedeutet große materielle Schäden, wozu noch Begleitschäden kommen, wie Schäden an Dämmmaterialien, an Strom- und Wasserleitungen, etc.

Neben den materiellen Schäden, die Nagetiere anrichten, sind einige Arten auch als Überträger von Krankheiten bekannt, und stellen so eine Bedrohung für den Menschen dar. Durch Bisse können unter anderen Pasteurellose und Tollwut übertragen werden. Durch die Exkremente der Nagetiere kann es unter anderem zur Übertragung von Salmonellose und Leptospirose, sowie von hämorrhagischem Fieber kommen. Die wohl bekanntesten Krankheiten sind jene, die von auf den Nagetieren parasitierenden Flöhen übertragen werden, wie das murine Fleckfieber und die Pest.

Die Bekämpfung oder zumindest Eindämmung der Population an Nagetieren ist daher ein Ziel der Schädlingsbekämpfung und auch des Pflanzenschutzes und stellt ein wichtiges Element der Hygienevorsorge dar.

Mausbekämpfungsmittel mit Fraßködern sind seit längerer Zeit bekannt. Weit verbreitet sind als Wirkstoff die Cumarine, die als Antikoagulanzien aus der Gruppe der Vitamin-K-Antagonisten die Blutgerinnung hemmen. Diese haben den Vorteil, dass die toxische Wirkung nicht unmittelbar nach der Nahrungsaufnahme eintritt, sondern erst zu einem späteren Zeitpunkt, wenn sich die bekämpften Nager zurückziehen und daher nicht neben dem Fraßköder liegen bleiben. Derartige Mischungen sind beispielsweise aus der FR 3 002 414 A1 oder der GB 735 649 A bekannt.

Die zuständigen Behörden bewerten Antikoagulanzien als Rodentizide inzwischen sehr kritisch. Zum einen kann es zu Resistenzen der bekämpften Nagerpopulation kommen. Zum anderen können umweltgefährliche Eigenschaften auftreten, wie Persistenz oder Bioakkumulation. Weiters kann aufgrund innerer Blutung bei den Tieren schweres und einige Tage dauerndes Tierleid verursacht werden. Überdies wirken diese Wirkstoffe nicht nur gegen die Nagetiere, sondern auch auf Raubtiere, wie Eulen, Mäusebussarde, Steinadler, Füchse und Iltisse, für die Mäuse als Futter dienen. Weiters können auch samen- und körnerfressende Vögel betroffen sein, wenn diese die Fressköder direkt fressen.

Zusammensetzungen, die ohne Verwendung von toxischen Mitteln auskommen, sind beispielsweise aus der CN 103999879 A bekannt. Die toxische Wirkung von Grayanotoxinen wird beispielsweise in der Stellungnahme Nr. 043/2010 des deutschen Bundesinstituts für Risikobewertung beschrieben. Selbst bei Langzeitversuchen konnte hier nur bei wenigen Tieren eine letale Wirkung festgestellt werden.

Vorrichtungen zur Abgabe von Wirkstoffen und Wirkstoffmischungen sind beispielsweise aus der US 5 027 548 A, der US 2015/351378 A1 und der FR 2 901 455 A1 bekannt.

Die vorliegende Erfindung hat sich zur Aufgabe gemacht, ein sicher wirkendes Mittel und Vorrichtung zur Bekämpfung von Nagetieren, wie Mäusen, zu schaffen, welches biologisch ist, aus der Natur stammt, sicher wirksam ist, und begrenzte oder keine Umweltschädlichkeit verursacht. Ein weiteres Ziel ist darin gegeben, dass das Mittel leicht anwendbar und kostengünstig ist. Die genannte Aufgabe wird durch die Verwendung eines Mittels gemäß Anspruch 1 bzw. ein Rodentizid gemäß Anspruch 16 gelöst.

Das erfindungsgemäß verwendete Mittel ist dadurch gekennzeichnet, dass es einen oder mehrere Wirkstoffe aus der Gruppe der Grayanotoxine enthält oder aus diesen besteht. Das Mittel kann zusätzlich zum Wirkstoff einen das Nagetier anlockenden Fraßköder und/oder Lockstoff aufweisen. Der Fraßköder kann ein das Nagetier zur oralen

Aufnahme des Fraßköders und des Wirkstoffs verleitender Wirkstoffträger sein oder diesen aufweisen.

In einer Variante ist der Wirkstoff mit einem Wirkstoffträger auf einer Abstreiffläche aufgetragen, um den Wirkstoff auf die Haut oder das Fell des Nagetiers zu übertragen. In einer anderen Variante kann der Fraßköder in einer Umhüllung, wie einem Säckchen aus Kunststoff, wie Nylon oder Bioplastik, eingeschlossen sein, die vom Schädling öffenbar ist.

Weiters kann das Mittel mit einem Antigerinnungsmittel, wie Bromadiolon, kombiniert sein.

Bevorzugt ist das Mittel dadurch gekennzeichnet, dass der Wirkstoffträger aus der Gruppe natürlicher Öle, Wachse und Honig und deren Gemische, Emulsionen, Lösungen und Dispersionen ausgewählt ist. Weiters bevorzugt kann der der Wirkstoffträger folgende Inhaltsstoffe enthalten (Gew.-%):
- Zucker, bevorzugt 60 % bis 85 %, insbesondere etwa 80 %,
- Organische Säuren, bevorzugt 0,2 % bis 0,8 %, insbesondere etwa 0,6 %,
- Enzyme, bevorzugt 1 % bis 3 %, insbesondere etwa 2 Gew.-%,
- Mineralstoffe, bevorzugt Kaliumsalz 0,1 % bis 0,5 %, insbesondere etwa 0,2 %, und
- Wasser auf 100 %,
sowie gegebenenfalls lockende Zusatzstoffe, wie Duftstoffe, Aromastoffe, Konservierungsstoffe, Färbemittel, etc.

Das Grayanotoxin kann auch im natürlichen Honig als Wirkstoffträger enthalten sein. Bevorzugt ist das Grayanotoxin in einer Menge von etwa 10 mg bis 300 mg pro kg Wirkstoffträger, insbesondere Honig, enthalten.

Bei der Anwendung des Mittels kann in vorteilhafterweise vorgesehen sein, dass das Mittel, insbesondere als Fraßköder und/oder auf einer Abstreiffläche, in einer Köderbox enthalten ist. Bevorzugt ist die Köderbox derart ausgebildet, dass der Zutritt des Schädlings ermöglicht und gegebenenfalls der Austritt des Schädlings verhindert ist. Der Fraßköder kann zur direkten oralen Aufnahme durch den Schädling, insbesondere das Nagetier, ausgebildet sein. Weiters kann der Fraßköder und/oder die Abstreiffläche zur indirekten Aufnahme des Wirkstoffs durch den Schädling, insbesondere durch das Nagetier, ausgebildet sein, insbesondere durch orale Aufnahme beim Fellputzen.

Die Vorrichtung kann als Köderbox mit Boden, Seitenrändern und Deckel ausgebildet sein. Weiters weist die Vorrichtung zumindest ein Zugangsloch für den Zutritt des Schädlings auf. Das Zugangsloch kann mit einer Kipptürenanordnung ausgestattet sein, wodurch der Zutritt des Schädlings ermöglicht und der Austritt des Schädlings verhindert ist.

Im Inneren der Köderbox ist bevorzugt ein Köderbehältnis zur Aufnahme des Mittels, insbesondere des Fraßköders, vorgesehen. Im Inneren der Köderbox kann eine, zur indirekten Aufnahme des Mittels durch den Schädling ausgebildete, Abstreiffläche vorgesehen sein. In Weiterbildung der Erfindung kann der Innenraum der Köderbox gegen den Zutritt von Insekten und Kleintieren geschützt sein. Weiters kann die Köderbox Luftlöcher umfassen, wobei gegebenenfalls die Luftlöcher von einem feinmaschigen Gitter oder Gewebe abgedeckt sind, um den Zutritt von Insekten und Kleintieren zu verhindern sind. Bevorzugt ist die Köderbox mit einem wasserdichten Boden ausgebildet, und die Luftlöcher sind hoch genug über dem Boden angeordnet, um einen Wassereintritt zu vermeiden.

Die Verwendung des Mittels kann auch umfassen, dass der Fraßköder Köderkörner, Köderpellets oder Köderpaste umfasst, auf dem der Wirkstoff mit oder ohne zusätzlichen Wirkstoffträger aufgetragen ist.

Weiters kann es vorteilhaft sein, das Mittel als Spray oder Schaum zu konditionieren. Der Wirkstoffträger ist dann als sprühfähige oder schaumbildende Flüssigkeit zu formulieren. Somit kann das Mittel leicht auf Kontaktflächen oder Fraßköder aufgetragen werden.

Weitere Merkmale sind den Ansprüchen und der Beschreibung zu entnehmen.

Untersuchungen und länger dauernde Feldversuche haben überraschend ergeben, dass der Wirkstoff Grayanotoxin gute Eigenschaften als Rodentizid aufweist. Die Grayanotoxine sind in der Literatur erschöpfend beschrieben und die chemischen Formeln bekannt. Es hat sich gezeigt, dass Wirkungen des Mittels schon bei geringer Konzentration des Wirkstoffes eintreten. Die letale Dosis für Grayanotoxin 1 beträgt bei Mäusen etwa 5,1 mg pro kg Lebendgewicht und für Grayanotoxin 3 etwa 4,9 mg pro kg Lebendgewicht. Das Mittel kann als Wirkstoffträger natürliche und/oder synthetische Trägersubstanzen oder -substanzgemische enthalten. Natürliche Trägersubstanzen können bevorzugt aus der Gruppe natürlicher Öle, Wachse und Honig und deren Gemische, Emulsionen, Lösungen oder Dispersionen ausgewählt sein.

Ein bevorzugter Wirkstoffträger kann folgende Inhaltsstoffe enthalten (Gew.-%):
- Zucker, bevorzugt 60 % bis 85 %, insbesondere etwa 80 %,
- Organische Säuren, bevorzugt 0,2 % bis 0,8 %, insbesondere etwa 0,6 %,
- Enzyme, bevorzugt 1 % bis 3 %, insbesondere etwa 2 Gew.-%,
- Mineralstoffe, bevorzugt Kaliumsalz 0,1 % bis 0,5 %, insbesondere etwa 0,2 %, und
- Wasser auf 100 %,
- Wirkstoffgehalt wie oben beschrieben,
sowie gegebenenfalls lockende Zusatzstoffe, wie Duftstoffe, Aromastoffe, Konservierungsstoffe, Färbemittel, etc. enthält.

Der Zuckergehalt kann aus der Gruppe Fructose, Glucose, Saccharide, Disaccharide ausgewählt sein. Die organischen Säuren sind bevorzugt aus der Gruppe Glukonsäure, Zitronensäure, Apfelsäure, Bernsteinsäure und Ameisensäure, sowie die Enzyme aus der Gruppe Invertase, Diastase, Katalase, Phosphatase, Inhibine. Der Mineralstoff ist bevorzugt vorwiegend ein Kaliumsalz.

Ein natürliches Vorkommen von Grayanotoxinen ist Honig aus Gebieten mit hohem Bestand an Rhododendren. Das erfindungsgemäße Mittel kann dieser natürlich gebildete Honig mit Gehalt an Grayanotoxin sein. Der Gehalt an Grayanotoxin kann Schwankungen unterliegen, beispielsweise 10 mg bis 300 mg pro kg Honig.

In Versuchen wurde festgestellt, dass Mäuse nur selten eine Resistenz gegen Grayanotoxin entwickeln, was offensichtlich damit zusammenhängt, dass das Grayanotoxin und die verschiedenen Varianten dieses Wirkstoffs auf verschiedene Zielrezeptoren abzielen.

Das Grayanotoxin ist bei natürlichem Ursprung in einer Menge von etwa 10 mg bis 300 mg pro kg Honig enthalten. Honig stellt überdies ein Lockmittel für Mäuse dar, welches zum Verzehr anregt. Weiters bleiben Trägersubstanzen, wie Honig, am Fell der Nagetiere hängen und die Wirksubstanz kann beim natürlichen Putzen des Felles oral in den Körper gelangen.

Bevorzugt wird der Fraßköder in einer Köderbox (Bait-Box) enthalten sein. Köderboxen sind als Mausefallen weit bekannt. Sie ermöglichen den Zutritt des Nagetiers und verhindert dessen Austritt. Damit wird jedenfalls sichergestellt, dass Schädigungen der Umwelt und von Raubtieren, wie Vögeln, Füchsen, etc., ausgeschlossen werden.

Allerdings ist es auch möglich, Fressköder mit dem Wirkstoff in den Gängen der Nagetiere auszulegen. Auch die Anwendung direkt am Mausloch ist möglich.

Der Fraßköder kann in jeder geeigneten Form vorliegen, wie z.B. für die direkte Aufnahme, z.B. in Form von Getreidekörnern als Köderkörner, die mit dem Wirkstoff und gegebenenfalls mit einer Trägersubstanz überzogen sind. Wenn das Grayanotoxin in einer klebrigen Flüssigkeit enthalten ist, wie z.B. Honig, dann kann auch eine Oberfläche als Abstreiffläche damit bestrichen sein, die von dem Nagetier abgeschleckt oder auf das Fell übertragen wird, um dort oral aufgenommen zu werden. Die Fressköder sind so mengenmäßig auszugestalten, dass eine entsprechende Aufnahme durch das Nagetier gewährleistet ist, dass also zumindest die letale Dosis aufgenommen wird, um ein sicheres Verenden des Tieres ohne längerem Leiden zu gewährleisten.

Wenn das Schädlingsbekämpfungsmittel insbesondere als Pflanzenschutzmittel eingesetzt werden soll, werden vor allem jene Pflanzen geschützt, bei denen es häufig zu Wurzelfraß oder Fraß der gebildeten Früchte kommt. Feldversuche wurden in Südtirol auf einer Fläche von ca. 7 Hektar Obstanbau mit Apfelbaumbestand durchgeführt. Die bekämpften Mausarten umfassten Feldmaus, Schermaus, Erdmaus, Rötelmaus und andere. Als Wirkstoffträger wurde Honig verwendet, dessen Gehalt an Grayanotoxinen zwischen 10 und 300 mg pro kg Honig lag. Die Grayanotoxine bestanden überwiegend aus den Varianten Grayanotoxin 1 und 3. Es sind jedoch alle Grayanotoxine 1 bis 8 einsetzbar.

Neben landwirtschaftlichen Flächen eignen sich auch Lagerflächen, öffentliche Parks, Gebäude, etc. als Einsatzgebiet für das erfindungsgemäße Mittel.

Bei den Feldversuchen wurde über mehrere Jahre hindurch auf einem Gebiet von etwa 7 ha Obstanbau - hauptsächlich Apfelanbau - die Wirksamkeit des Mittels bestätigt. Resistenzen wurden in keinem Fall festgestellt. Die Anwendung erfolgte in einer Köderbox mit einer Mindestmenge von 1 mg Grayanotoxin auf oder in dem Fressköder. Die Nagetiere verschafften sich auch Zutritt zu dem Fressköder, wenn dieser in einer Verpackung aus Kunststoff, wie Nylon, Biokunststoff, Papier, Plastik aller Art oder Gelatinekapseln eingeschlossen war.

Das Mittel wurde sowohl in Säckchen verpackt als auch ohne Umhüllung in Köderboxen angewendet. Die Anwendung erfolgte versuchsmäßig über alle Jahresmonate der Jahre 2013 bis Mai 2017. In fast 100% aller beobachtbarer Fälle trat der Tod der Nagetiere binnen kurzer Zeit ein.

Resistenzen wurden nicht beobachtet. Bevorzugter Wirkstoffträger war Honig, womit das Mittel von den Nagetieren in größeren Mengen aufgenommen wurde. Die Tiere verschafften sich auch dann Zutritt zu dem Mittel, wenn es in dichten Säckchen, wie aus Plastikfolie (z.B. Nylon), enthalten war. Die Kontaktierung der Köder durch Menschen hatte keinen negativen Einfluss. Sogar das Umhüllen mit drei Säckchen konnte die Nagetiere nicht vom Verzehr des Mittels abhalten.

Bei Kombination des Mittels mit Bromadiolon, sowohl in einer Köderbox als auch direkt in Mausgängen ausgelegt, trat ebenfalls die gewünschte Wirkung binnen kurzer Zeit ein, wobei hauptsächlich das Mittel mit Honig als Wirkstoffträger verzehrt wurde, weniger jedoch das Bromadiolon.

Bevorzugt wird das Mittel mittels einer Köderbox angewendet, in die ein Wirkstoffpäckchen eingelegt werden kann, welches den Wirkstoff in entsprechender Menge im Wirkstoffträger - wie Honig - aufweist. Die Wirkstoffpäckchen können z.B. als Säckchen aus den genannten Materialien und gefüllt mit dem Mittel ausgebildet sein.

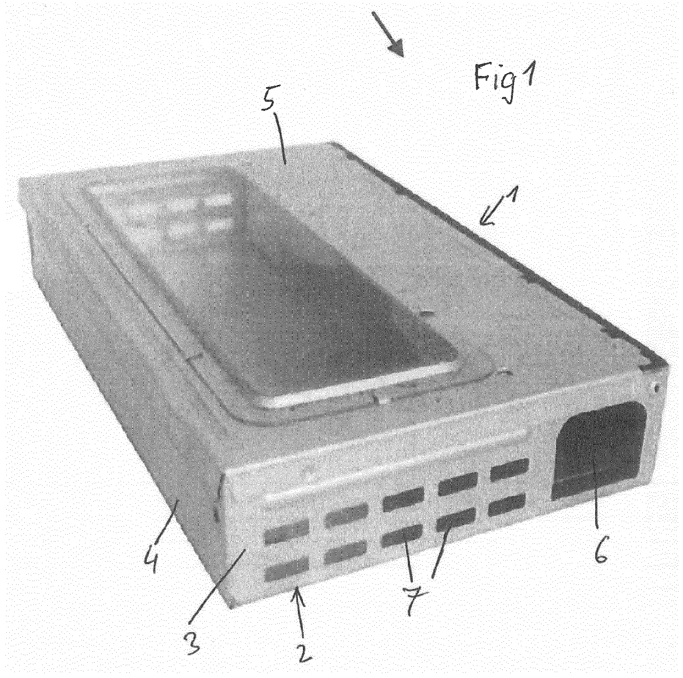

Fig. 1 zeigt eine Ansicht einer Köderbox schräg von vorne.
Fig. 2 zeigt eine Innenansicht auf die Kipptür der Köderbox.

Die Köderbox 1 ist schachtelförmig mit einem Boden 2, Seitenrändern 3, 4 und einem Deckel 5, der abnehmbar oder schwenkbar ist, um den Zugriff zum Innenraum zu ermöglichen.

Das Zugangsloch 6 ermöglicht den Zutritt des Tieres in das Innere der Köderbox 1. Die Luftöffnungen 7 erlauben Luftzutritt und sind bevorzugt durch engmaschige Gitter oder Gewebe abgedeckt, um das Eindringen von Insekten und Kleintieren zu verhindern.

Demgemäß muss die Maschenweite des Gitters oder Gewebes eng gewählt werden.

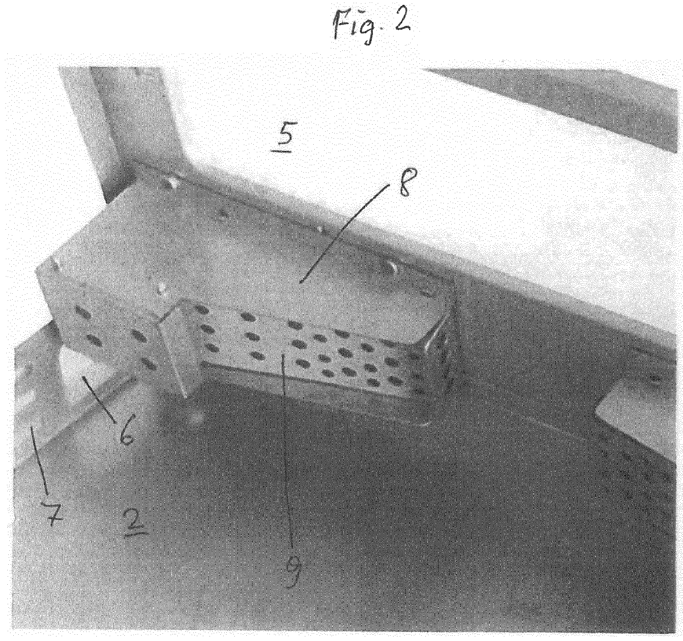

Die Fig. 2 zeigt im Inneren der Köderbox 1 die Kipptürenanordnung 8 in um 90° verdrehter Stellung.

Die Kipptür 9 wirkt als Fallenklappe, die sich öffnet, wenn das Tier auf sie aufsteigt und wieder hochklappt, wenn das Tier die Fallenklappe verlässt, um zum Köder im Inneren der Köderbox 1 zu gelangen.

Zur Aufnahme des Köders in Form des Wirkstoffpäckchens ist im Inneren der Köderbox 1 bevorzugt ein Köderbehältnis vorgesehen, in welchem der Köder eingelegt und ausgetauscht werden kann. Die Luftöffnungen 7 der Köderbox 1 sind bevorzugt so hoch über dem Boden 2 angeordnet, dass Wassereintritt bei Regen verhindert ist. In der Praxis hat sich gezeigt, dass ein Mindestabstand von etwa 2 cm oder höher vorteilhaft ist. Das Köderbehältnis in der Köderbox 1 kann zu diesem Zweck auch in einem Abstand vom Boden 2 angeordnet sein, damit der Köder vom Wasser ferngehalten wird, wenn doch etwa Wasser eingedrungen ist.

Somit ist sichergestellt, dass der Köder auch bei Wassereintritt funktionsfähig bleibt oder schlechtenfalls der Wirkstoff nicht ins Freie gelangt. Die einfache Wartung der Köderbox 1 ist gewährleistet.

Das Mittel mit dem Wirkstoffträger, wie Honig, kann zur besseren Handhabe in die oben genannten Säckchen als Wirkstoffpäckchen eingefüllt sein und verschlossen in die Köderbox 1 oder deren Köderbehältnis eingelegt werden.

Die Nagetiere öffnen die Säckchen und kommen so mit dem Mittel in Kontakt. Das Wirkstoffpäckchen kann auch von der Bedienperson geöffnet werden. Das Mittel kann flüssig oder auch auf einer Trägersubstanz aufgetragen sein.

## Patentansprüche

1. Verwendung eines Mittels als Nagetierbekämpfungsmittel, **dadurch gekennzeichnet, dass** das Mittel einen oder mehrere Wirkstoffe aus der Gruppe der Grayanotoxine in wirksamer Menge enthält oder aus diesen besteht.

2. Verwendung nach Anspruch 1, **dadurch gekennzeichnet, dass** das Mittel zusätzlich zum Wirkstoff einen das Nagetier anlockenden Fraßköder und/oder Lockstoff aufweist.

3. Verwendung nach Anspruch 2, **dadurch gekennzeichnet, dass** der Fraßköder ein das Nagetier zur oralen Aufnahme des Fraßköders und des Wirkstoffs verleitender Wirkstoffträger ist oder diesen aufweist.

4. Verwendung nach Anspruch 1, **dadurch gekennzeichnet, dass** der Wirkstoff mit einem Wirkstoffträger auf einer Abstreiffläche aufgetragen ist, um den Wirkstoff auf die Haut oder das Fell des Nagetiers zu übertragen.

5. Verwendung nach einem der Ansprüche 1 bis 4, **dadurch gekennzeichnet, dass** der Fraßköder in einer Umhüllung, wie einem oder mehreren Säckchen aus Kunststoff, wie Nylon oder Bioplastik, eingeschlossen ist, die vom Nagetier öffenbar ist.

6. Verwendung nach einem der vorhergehenden Ansprüche, **dadurch gekennzeichnet, dass** der Fraßköder Köderkörner, Köderpellets oder Köderpaste umfasst, auf dem der Wirkstoff mit oder ohne zusätzlichen Wirkstoffträger aufgetragen ist.

7. Verwendung nach einem der Ansprüche 1 bis 6, **dadurch gekennzeichnet, dass** das Mittel mit einem Antigerinnungsmittel, wie Bromadiolon, kombiniert ist.

8. Verwendung nach einem der Ansprüche 1 bis 7, **dadurch gekennzeichnet, dass** der Wirkstoffträger aus der Gruppe natürlicher Öle, Wachse und Honig und deren Gemische, Emulsionen, Lösungen und Dispersionen ausgewählt ist.

9. Verwendung nach einem der Ansprüche 1 bis 8, **dadurch gekennzeichnet, dass** das Grayanotoxin in einer Menge von etwa 10 mg bis 300 mg pro kg Wirkstoffträger, insbesondere Honig, enthalten ist.

10. Verwendung nach einem der Ansprüche 1 bis 9, **dadurch gekennzeichnet, dass** das Mittel einen sprühfähigen oder schäumfähigen Wirkstoffträger aufweist und in einem Sprüh- oder Schäumbehälter enthalten ist.

11. Verwendung nach einem der vorhergehenden Ansprüche in Kombination mit einer Vorrichtung, die als Köderbox (1) ausgebildet ist, wobei die Vorrichtung zumindest ein Zugangsloch (6) für den Zutritt des zu fangenden Schädlings aufweist.

12. Verwendung nach Anspruch 11, **dadurch gekennzeichnet, dass** die Köderbox mit Boden (2), Seitenrändern (3, 4) und Deckel (5) ausgebildet ist.

13. Verwendung nach Anspruch 11 oder 12, **dadurch gekennzeichnet, dass** das Zugangsloch (6) mit einer Kipptürenanordnung (8) ausgestattet ist, wodurch der Zutritt des Nagetiers ermöglicht und der Austritt des Nagetiers verhindert ist.

14. Verwendung nach einem der Ansprüche 11 bis 13, **dadurch gekennzeichnet, dass** im Inneren der Köderbox (1) ein Köderbehältnis zur Aufnahme des Mittels, insbesondere des Fraßköders, vorgesehen ist.

15. Verwendung nach einem der Ansprüche 11 bis 13, **dadurch gekennzeichnet, dass** im Inneren der Köderbox (1) eine zur indirekten Aufnahme des Mittels durch den Schädling ausgebildete Abstreiffläche vorgesehen ist.

16. Rodentizid, **dadurch gekennzeichnet, dass** es einen oder mehrere Wirkstoffe aus der Gruppe der Grayanotoxine in wirksamer Menge und einen das Nagetier anlockenden Fraßköder und/oder Lockstoff, bevorzugt Honig, aufweist.

17. Rodentizid nach Anspruch 16, **dadurch gekennzeichnet, dass** das Mittel mit einem Antigerinnungsmittel, wie Bromadiolon, kombiniert ist.

## Claims

1. A use of an agent as rodenticide, **characterized in that** the agent contains or consists of one or more active substances from the group of grayanotoxins in an effective amount.

2. The use according to claim 1, **characterized in that** the agent comprises, in addition to the active substance, a feeding bait and/or attractant, which attracts the rodent.

3. The use according to claim 2, **characterized in that** the feeding bait is or comprises an active substance carrier enticing the rodent to orally ingest the feeding bait and the active substance.

4. The use according to claim 1, **characterized in that** the active substance is applied with an active substance carrier to a wiping surface to transfer the active substance to the skin or fur of the rodent.

5. The use according to one of claims 1 to 4, **characterized in that** the feeding bait is enclosed in an envelope, such as one or more sachets of plastic, such as nylon or bioplastic, which can be opened by the rodent.

6. The use according to one of the preceding claims, **characterized in that** the feeding bait comprises bait grains, bait pellets or bait paste, to which the active substance is applied with or without an additional active substance carrier.

7. The use according to one of claims 1 to 6, **characterized in that** the agent is combined with an anticoagulant such as bromadiolone.

8. The use according to one of claims 1 to 7, **characterized in that** the active substance carrier is selected from the group consisting of natural oils, waxes and honey and their mixtures, emulsions, solutions and dispersions.

9. The use according to one of claims 1 to 8, **characterized in that** the grayanotoxin is contained in an amount of about 10 mg to 300 mg per kg of active substance carrier, in particular honey.

10. The use according to one of claims 1 to 9, **characterized in that** the agent comprises a sprayable or foamable active substance carrier and is contained in a spray or foam container.

11. The use according to one of the preceding claims in combination with a device configured as a bait box (1), the device having at least one access hole (6) for the access of the pest to be captured.

12. The use according to claim 11, **characterized in that** the bait box is formed with a base (2), side edges (3, 4) and a cover (5).

13. The use according to claim 11 or 12, **characterized in that** the access hole (6) is provided with a tilt door arrangement (8), allowing the access of the rodent and preventing the escape of the rodent.

14. The use according to one of claims 11 to 13, **characterized in that** a bait container is provided inside the bait box (1) for receiving the agent, in particular the feeding bait.

15. The use according to one of claims 11 to 13, **characterized in that** a wiping surface designed for indirect absorption of the agent by the pest is provided inside the bait box (1).

16. A rodenticide, **characterized in that** it comprises one or more active substances from the group of grayanotoxins in an effective amount and a feeding bait and/or attractant, preferably honey, which attracts the rodent.

17. The rodenticide according to claim 16, **characterized in that** the agent is combined with an anticoagulant such as bromadiolone.

## Revendications

1. Une utilisation d'un agent comme agent de lutte contre les rongeurs, **caractérisée en ce que** l'agent contient ou est constitué d'une ou plusieurs substances actives du groupe des grayanotoxines en quantité efficace.

2. L'utilisation selon la revendication 1, **caractérisée en ce que** l'agent comprend, en plus de la substance active, un appât et/ou une substance attractive attirant le rongeur.

3. L'utilisation selon la revendication 2, **caractérisée en ce que** l'appât est ou comporte un support de substance active qui incite le rongeur à ingérer par voie orale l'appât et la substance active.

4. L'utilisation selon la revendication 1, **caractérisée en ce que** la substance active est appliquée avec un support de substance active sur une surface de grattage afin de transférer la substance active sur la peau ou le pelage du rongeur.

5. L'utilisation selon l'une des revendications 1 à 4, **caractérisée en ce que** l'appât est enfermé dans une enveloppe, telle qu'un ou plusieurs sachets en matière plastique, telle que du nylon ou du bioplastique, qui peut être ouverte par le rongeur.

6. L'utilisation selon l'une des revendications précédentes, **caractérisée en ce que** l'appât comprend des granules d'appât, des pastilles d'appât ou une pâte d'appât sur laquelle est appliquée la substance active avec ou sans support supplémentaire de substance active.

7. L'utilisation selon l'une des revendications 1 à 6, **caractérisée en ce que** l'agent est combiné avec un agent anti-coagulant, tel que la bromadiolone.

8. L'utilisation selon l'une des revendications 1 à 7, **caractérisée en ce que** le support de substance active est choisi dans le groupe des huiles naturelles, des cires et du miel et de leurs mélanges, émulsions, solutions et dispersions.

9. L'utilisation selon l'une des revendications 1 à 8, **caractérisée en ce que** la grayanotoxine est contenue en une quantité d'environ 10 mg à 300 mg par kg de support de substance active, en particulier de miel.

10. L'utilisation selon l'une des revendications 1 à 9, **caractérisée en ce que** l'agent comprend un support de substance active pulvérisable ou moussable et est contenue dans un récipient de pulvérisation ou de moussage.

11. L'utilisation selon l'une des revendications précédentes en combinaison avec un dispositif se présentant sous la forme d'une boîte à appât (1), le dispositif comportant au moins un trou d'accès (6) pour l'entrée du nuisible à capturer.

12. L'utilisation selon la revendication 11, **caractérisée en ce que** la boîte à appât est formée avec un fond (2), des bords latéraux (3, 4) et un couvercle (5).

13. L'utilisation selon la revendication 11 ou 12, **caractérisée en ce que** le trou d'accès (6) est équipé d'un ensemble de porte basculante (8), permettant l'entrée du rongeur et empêchant la sortie du rongeur.

14. L'utilisation selon l'une des revendications 11 à 13, **caractérisée en ce qu'**il est prévu à l'intérieur de la boîte d'appât (1) un réceptacle d'appât destiné à recevoir l'agent, notamment l'appât.

15. L'utilisation selon l'une des revendications 11 à 13, **caractérisée en ce qu'**il est prévu à l'intérieur de la boîte d'appât (1) une surface de grattage adaptée pour l'absorption indirecte de l'agent par le nuisible.

16. Un rodenticide, **caractérisé en ce qu'**il comprend une ou plusieurs substances actives du groupe des grayanotoxines en quantité efficace et un appât et/ou une substance attractive, de préférence du miel, attirant le rongeur.

17. Le rodenticide selon la revendication 16, **caractérisé en ce que** l'agent est combiné avec un agent anti-coagulant, tel que la bromadiolone.
